# EUROPÄISCHE PATENTSCHRIFT

(11) **EP 2 427 722 B1**
(45) Veröffentlichungstag und Bekanntmachung des Hinweises auf die Patenterteilung: **03.08.2016**
(21) Anmeldenummer: 10716520.1
(22) Anmeldetag: 14.04.2010
(51) Int. Cl.: G01B 3/00, G01B 5/008, G01B 7/008, G01B 21/04

(54) **VERFAHREN UND VORRICHTUNG ZUR MESSUNG EINES OBERFLÄCHENPROFILS**
METHOD AND DEVICE FOR MEASURING A SURFACE PROFILE
PROCÉDÉ ET DISPOSITIF DE MESURE D'UN PROFIL DE SURFACE

(30) Priorität: 07.05.2009 DE 102009020294
(43) Veröffentlichungstag der Anmeldung: 14.03.2012
(73) Patentinhaber: CARL MAHR HOLDING GMBH, 37073 Göttingen (DE)
(72) Erfinder: REITEMEYER, Matthias, 37079 Göttingen (DE); KEDZIORA, Heinz-Joachim, 37083 Göttingen (DE)
(74) Vertreter: Rüger, Barthelt & Abel
(86) Internationale Anmeldenummer: PCT/EP2010/054892
(87) Internationale Veröffentlichungsnummer: WO 2010/127930

(56) Entgegenhaltungen:
- WO-A1-94/12850
- DE-A1- 4 212 455
- DE-A1- 10 258 579
- DE-A1- 19 641 720
- DE-C1- 19 617 022
- US-A- 5 471 406

## Beschreibung

Die Erfindung betrifft eine Messvorrichtung und ein Verfahren zur Messung eines Oberflächenprofils eines Werkstücks.

Aus der DE 197 53 303 A1 ist ein so genanntes Koordinatenmessgerät bekannt. Ein an einem Tastkopf in drei Raumrichtungen verschiebbarer Taststift wird dabei über die Oberfläche des auszumessenden Werkstücks bewegt. Der Tastkopf bewegt sich dabei entlang einer Bahnkurve, die auf Basis der vom Taststift abzufahrenden Sollkontur ermittelt wird. Die Sollkontur kann beispielsweise durch Punktfolgen und zugeordnete Normalenvektoren vorgegeben werden. Durch die Bewegung des Tastkopfes entlang der Bahnkurve wird auf den Taststift eine Zentrifugalkraft ausgeübt, die das Messergebnis beim Erfassen der Taststiftauslenkungen beeinflusst. Aus diesem Grund wird die Bahnbeschleunigung des Tastkopfes ermittelt und die dadurch ausgeübte, den Taststift beschleunigende Kraft berechnet. Diese Kraft kann zur Korrektur der zwischen Taststift und Werkstückoberfläche gewünschten Sollmesskraft dienen.

Bei diesem Verfahren ist es notwendig den Profilverlauf der Werkstückoberfläche zumindest ungefähr zu kennen, um die Bahnkurve des Tastkopfes einstellen zu können.

US 5 471 406 beschreibt eine Koordinatenmessgerät und ein Verfahren zur schnellen Messung von Elementformen eines Werkstücks, die eine zumindest ungefähr bereits bekannte Geometrie und Position aufweisen. Die Form wird an verschiedenen Messstellen angetastet. Um ein Durchbiegen des Taststifts zu vermeiden wird die Messkraft, mit der das Werkstück angetastet wird, konstant gehalten.

Es kann als eine Aufgabe der vorliegenden Erfindung angesehen werden eine verbesserte Messvorrichtung bzw. ein verbessertes Messverfahren zu schaffen.

Diese Aufgabe wird durch eine Messvorrichtung nach Patentanspruch 1 und ein Messverfahren nach Patentanspruch 15 gelöst.

Bei der erfindungsgemäßen Messvorrichtung ist ein Messschlitten vorgesehen, der mittels eines Schlittenantriebs während der Messung geradlinig mit Abstand zur Werkstückoberfläche in eine Bewegungsrichtung bewegt wird. Der Messschlitten kann ausschließlich entlang einer Achse in die Bewegungsrichtung bewegt werden. Am Messschlitten ist eine Tastspitze angeordnet, deren freies Tastende mit einer Messkraft auf der Werkstückoberfläche aufliegt. Eine Beschleunigung der Tastspitze in eine Messrichtung durch die Bewegung des Messschlittens findet während der Messung nicht statt. Während der Messung wird das Tastende in Bewegungsrichtung über die Werkstückoberfläche bewegt und dabei quer dazu in eine Messrichtung ausgelenkt. Ein Messwertaufnehmer erfasst dabei die Auslenkung des Tastendes und generiert eine wegabhängige Auslenkungsgröße. Die Auslenkungsgröße beschreibt das Oberflächenprofil des Werkstücks. In einer Auswerteinheit wird anhand der Auslenkungsgröße eine Messkraftänderungsgröße ermittelt, die die Änderung der Messkraft zwischen Tastende und Werkstückoberfläche angibt.

Die Auswerteeinheit ermittelt anhand der Auslenkungsgröße die tatsächliche Auslenkung ermittelt, und daraus die Beschleunigung des Tastendes in Messrichtung. Es wird dann die zur Beschleunigung proportionale dynamische Kraft ermittelt, die die Messkraftänderungsgröße darstellt, wobei die dynamische Kraft die Abweichung der Messkraft von der statischen Andrückkraft darstellt. Die in der Auswerteeinheit ermittelte Messkraftänderungsgröße kann zur Erkennung von Messfehlern oder Messungenauigkeiten verwendet werden.

Auf diese Weise wird die oberflächenabhängige Messkraftänderung ermittelt. Dadurch können Messfehler vermieden werden, die durch die Beschleunigung des Tastendes aufgrund des Profilverlaufs der Werkstückoberfläche entstehen können. Bei einer zu geringen Messkraft kann das Testende von der Werkstückoberfläche abheben, während bei einer zu großen Messkraft elastische Verformungen an Teilen der Messvorrichtung, z.B. der Tastspitze, auftreten können. In beiden Fällen wird das Messergebnis beeinträchtigt. Durch diese Messvorrichtung bzw. das damit durchgeführte Messverfahren ist eine große Genauigkeit der Vermessung des Oberflächenprofils möglich.

Vorteilhafte Ausführungen der Erfindung ergeben sich aus den abhängigen Patentansprüchen.

Die Messvorrichtung ist bei einer bevorzugten Ausführung für einen Messbereich von etwa 10 mm in Messrichtung ausgelegt, so dass Werkstücke mit einer maximalen Profilhöhendifferenz der Werkstückoberfläche von etwa 10 mm vermessen werden können. Profiländerungen der Werkstückoberfläche im Nanometerbereich können erkannt werden, beispielsweise ab etwa 6 nm.

Vorteilhafter Weise ermittelt die Auswerteeinheit die Änderung des Messkraftgröße abhängig von der Gradientenänderung der Auslenkungsgröße. Beispielsweise kann die zweite zeitliche Ableitung der Auslenkungsgröße zur Bestimmung der Änderung der Messkraftgröße dienen. Die zweite zeitliche Ableitung der Auslenkungsgröße ist direkt proportional zur Messkraftänderungsgröße, die dadurch sehr einfach bestimmt werden kann. Der Proportionalitätsfaktor wird dabei durch die Masse oder das Massenträgheitsmoment der beim Auslenken der Tastspitze bewegten Teile der Messvorrichtung gebildet.

Es ist weiterhin vorteilhaft, wenn der Auswerteeinheit ein Messkraftsollbereich für die Messkraftgröße vorgegeben ist, innerhalb dem eine exakte Messung erfolgen kann. Insbesondere kann der Messkraftsollbereich eine Messkraftobergrenze angeben, deren Überschreiten zum einen zu Messfehlern durch elastische Verformung der Tastspitze und der anderen mit der Tastspitze bewegten Teile führt und zum anderen eventuell auch eine Beschädigung der Werkstückoberfläche hervorruft. Es kann auch eine Messkraftuntergrenze angegeben werden, deren Unterschreiten zu Messfehlern führt, da das Tastende der Tastspitze keinen ausreichenden Kontakt mehr mit der Werkstückoberfläche hat. Eine Sollmesskraft gibt die gewünschte Messkraft zwischen Tastende und Werkstückoberfläche an und liegt innerhalb des Messkraftsollbereichs.

Dabei ist es vorzugsweise vorgesehen, dass eine mit der Auswerteeinheit verbundene Bedienerschnittstelle vorhanden ist, mittels der der Messkraftsollbereich durch eine Bedienperson vorgegeben und/oder variiert werden kann. Über eine solche Bedienerschnittstelle können Messparameter der Messvorrichtung sehr einfach geändert werden. Insbesondere kann der Messkraftsollbereich und/oder die Sollmesskraft an die Eigenschaften der zu vermessenden Werkstückoberfläche, insbesondere deren Härte oder Elastizität, an die elastischen Eigenschaften der Messvorrichtung, insbesondere der Tastspitze, an die Geometrie der Tastspitze angepasst werden.

Bei einer bevorzugten Ausführungsform erzeugt die Auswerteeinheit ein Messfehlersignal, wenn die Messkraftgröße außerhalb des Messkraftsollbereichs liegt. Bei Auftreten eines Messfehlersignals kann damit manuell durch eine Bedienperson oder automatisch eine Maßnahme eingeleitet werden.

Das Messfehlersignal kann beispielsweise ein Abheben des Tastendes von der Werkstückoberfläche und/oder eine zu hohe Messkraft zwischen Tastende und Werkstückoberfläche angeben, je nachdem, ob ein oberer Grenzwert des Messkraftsollbereichs überschritten oder unterer Grenzwert des Messkraftsollbereichs unterschritten wurde. Daraufhin kann automatisch oder manuell eine erneute Messung mit entsprechend geänderten Messparametern, insbesondere einer angepassten Schlittengeschwindigkeit, durchgeführt werden.

Bei einem bevorzugten Ausführungsbeispiel kann als Maßnahme beim Auftreten eines Messfehlersignals eine Messfehlerinformation an die Bedienperson ausgegeben werden. Dies kann beispielsweise durch eine von der Auswerteeinheit angesteuerte Bedienerschnittstelle erfolgen. Die Messfehlerinformation kann optisch oder akustisch ausgegeben werden. Es ist besonders zweckmäßig, wenn die Messfehlerinformation einen Text enthält, der der Bedienperson Anweisung für die Behebung des Fehlers und für die weitere Messung zur Verfügung stellt. Vorzugsweise enthält die Messfehlerinformation eine Angabe über eine angepasste Schlittengeschwindigkeit für die weitere Messung.

Es ist auch möglich, dass die Auswerteeinheit beim Vorliegen eines Messfehlersignals eine erneute Messung des fehlerhaft gemessenen Oberflächenprofilabschnitts veranlasst. Hierfür kann die Auswerteeinheit den Schlittenantrieb ansteuern, so dass der Messschlitten zumindest bis zu der Schlittenposition zurück gefahren wird, an der der letzte fehlerfreie Messwert der Auslenkungsgröße vorlag.

Es ist ferner vorteilhaft, wenn eine durch die Auswerteeinheit ansteuerbare Kraftstelleinrichtung vorgesehen ist, die eine vorgebbare statische Andrückkraft zwischen Tastende und Werkstückoberfläche erzeugt. Mit Hilfe dieser Kraftstelleinrichtung kann die statische Andrückkraft variiert werden, insbesondere abhängig von der ermittelten oberflächenabhängigen Messkraftänderung. Insbesondere kann die Auswerteeinheit eine Anpassung der statischen Andrückkraft veranlassen, wenn ein Messfehlersignal vorliegt. Die statische Andrückkraft kann zur Anpassung der aktuellen Messkraft an die Sollmesskraft verändert werden. Als Kraftstelleinrichtung kann beispielsweise ein Linearantrieb dienen.

Somit kann bei der Erfindung bei einem Abheben des Tastendes manuell oder automatisch die Schlittengeschwindigkeit reduziert und/ oder die statische Andrückkraft erhöht werden. Bei einer zu großen Messkraft werden manuell oder automatisch die Schlittengeschwindigkeit und/ oder die statische Andrückkraft reduziert.

Die Schlittengeschwindigkeit des Messschlittens während der Messung kann konstant vorgegeben werden. Dadurch wirken auch in Bewegungsrichtung keine Beschleunigungen auf die Tastspitze. Die Schlittengeschwindigkeit des Messschlittens während der Messung kann alternativ auch parameterabhängig vorgegeben werden. Insbesondere kann die Schlittengeschwindigkeit dabei von der Auslenkungsgröße abhängen. Bei dieser Ausführungsvariante ist es möglich, die Geschwindigkeit der Tastspitze relativ zur Werkstückoberfläche konstant zu halten.

Weitere Einzelheiten von Ausführungsformen der Erfindung ergeben sich aus der Beschreibung, der Zeichnung oder den Ansprüchen. Die Beschreibung beschränkt sich auf wesentliche Einzelheiten von Ausführungsformen der Erfindung und sonstigen Gegebenheiten. Die Zeichnung offenbart weitere Einzelheiten und ist ergänzend heran zu ziehen. Es zeigen:
Fig. 1 eine schematische, blockschaltbildähnliche Darstellung eines Ausführungsbeispiels einer Messvorrichtung und
Fig. 2 einen schematisch dargestellten, beispielhaften Verlauf einer Messkraft während einer Messung.

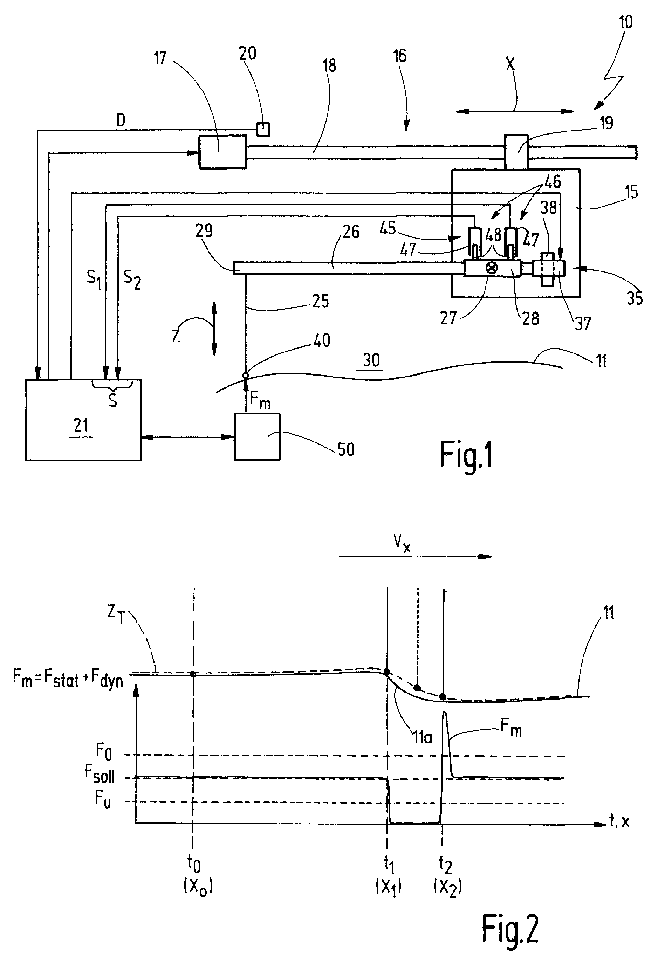

Figur 1 zeigt eine bevorzugte Ausführungsform einer Messvorrichtung 10 in schematischer, blockschaltbildähnlicher Darstellung. Die Messvorrichtung 10 dient zur Messung eines Oberflächenprofils 11 eines Werkstücks. Bei der in Figur 1 dargestellten Messvorrichtung 10 handelt es sich um ein so genanntes Tastschnittgerät. Auch andere Realisierungsformen der Messvorrichtung 10 sind möglich.

Die Messvorrichtung 10 weist einen Messschlitten 15 auf, der über einen Schlittenantrieb 16 in eine Bewegungsrichtung x geführt, bewegbar ist. Der Schlittenantrieb 16 weist einen elektrischen Antriebsmotor 17 auf, der eine sich in Bewegungsrichtung x erstreckende Spindel 18 rotatorisch in beide Drehrichtungen antreiben kann. Die Spindel 18 weist ein nicht näher dargestelltes Spindelgewinde auf, auf dem eine Spindelmutter 19 sitzt. Die Spindelmutter 19 ist fest mit dem Messschlitten 15 verbunden. Bei der Rotation der Spindel 18 bewegt sich die Spindelmutter 19 und der daran befestigte Messschlitten 15 entlang der Spindel 18 in Bewegungsrichtung x. Ein Drehwinkelsensor 20 erfasst die Rotation der Spindel 18 und übermittelt den Drehwinkelwert D an eine Auswerteeinheit 21. Die Auswerteeinheit 21 steuert den Antriebsmotor 17 an und kann dessen Drehrichtung, sowie dessen Drehgeschwindigkeit vorgeben. Über den Drehwinkelwert D kann die Position des Messschlittens 15 der Auswerteeinheit 21 bestimmt werden.

Am Messschlitten 15 ist eine Tastspitze 25 beweglich gelagert. Die Lagerung der Tastspitze 25 am Messschlitten 15 erfolgt mittelbar über einen Tastarm 26. Der Tastarm 26 erstreckt sich in seiner nicht ausgelenkten Ruhelage im Wesentlichen in Bewegungsrichtung x vom Tastschlitten 15 weg und ist am Tastschlitten 15 um eine Schwenkachse 27 schwenkbar auf einer Wippe 28 gelagert. Die Tastspitze 25 ragt an dem dem Messschlitten 15 entgegen gesetzten Ende 29 des Tastarms 26 quer und insbesondere rechtwinklig von diesem zum Messbereich 30 hin, in dem das Werkstück angeordnet ist. Die Tastspitze 25 streckt sich quer zur Bewegungsrichtung x, wobei sich die Ausrichtung der Tastspitze 25 abhängig von der Schwenkposition des Tastarms 26 um die Schwenkachse 27 verändert.

Der Tastarm 26 ist mit der Wippe 28 auf der einen Seite der Schwenkachse 27 verbunden, während die Wippe 28 auf der anderen Seite mit einer Kraftstelleinrichtung 35 verbunden ist. Diese ist auf dem Messschlitten 15 angeordnet. Die Kraftstelleinrichtung 35 ist beispielsgemäß als Linearantrieb ausgeführt und weist eine fest mit der Wippe 28 verbundene Spule 37 auf, die einen Magneten 38 ringförmig umschließt. Die Spule 37 kann durch die Auswerteeinheit 21 angesteuert werden. Fließt ein Strom durch die Spule 37 entsteht eine Lorentzkraft, die ein Drehmoment um die Schwenkachse 27 hervorruft. Die Kraftstelleinrichtung 35 kann mithin eine statische Andrückkraft Fₛₜₐₜ hervorrufen, mit der ein der Werkstückoberfläche 11 zugeordnetes Tastende 40 der Tastspitze 25 auf die Werkstückoberfläche 11 gedrückt wird. Die statische Andrückkraft Fₛₜₐₜ kann über die Auswerteeinheit 21 variiert werden.

Am Messschlitten 15 ist ein Messwertaufnehmer 45 vorgesehen, der eine Auslenkungsgröße s erzeugt, die die Auslenkung des Tastendes 40 in eine Messrichtung z quer zur Bewegungsrichtung x und quer zur Schwenkachse 27 beschreibt. Beim bevorzugten Ausführungsbeispiel besteht die Auslenkungsgröße s aus zwei separaten Messgrößen s₁, s₂, die unabhängig voneinander erfasst werden. Die beiden Messgrößen s₁, s₂ werden der Auswerteeinheit 21 zugeführt. Diese ermittelt die Auslenkung des Tastendes 40 in Messrichtung z auf Basis der vom Messwertaufnehmer 45 übermittelten Auslenkungsgröße s.

Der Messwertaufnehmer 45 weist beispielsgemäß zwei unabhängige Messeinheiten 46 auf, die bei dem hier beschriebenen Ausführungsbeispiel als induktive Messeinheiten 46 ausgeführt sind. Sie verfügen jeweils über eine Spule 47 und einen relativ dazu bewegbaren Kern 48. Beim Ausführungsbeispiel sind die Kerne 48 fest mit der Wippe 28 verbunden. Bei einer Schwenkbewegung der Wippe 28 um die Schwenkachse 27 bewegen sich die Kerne 48 relativ zu jeweils zugeordneten Messspule 47 und liefern die entsprechende Messgröße s₁, s₂ an die Auswerteeinheit 21. Alternativ können auch die Spulen 47 mit der Wippe 28 verbunden sein.

Die Messvorrichtung 10 weist beispielsgemäß weiterhin eine Bedienerschnittstelle 50 auf, die mit der Auswerteeinheit 21 elektrisch verbunden ist. Diese Verbindung ist bidirektional, so dass die Auswerteeinheit 21 über die Bedienerschnittstelle 50 Informationen an die Bedienperson ausgeben kann und umgekehrt die Bedienperson Eingaben oder Vorgaben mittels der Bedienerschnittstelle 50 an die Auswerteeinheit 21 übermitteln kann.

Zur Messung des Oberflächenprofils einer Werkstückoberfläche 11 wird der Schlittenantrieb 16 angesteuert, so dass sich der Messschlitten 15 mit beispielsgemäß konstanter Schlittengeschwindigkeit in Bewegungsrichtung x mit Abstand zur Werkstückoberfläche 11 bewegt. Das Tastende 40 der Tastspitze 25 liegt auf der Werkstückoberfläche auf und wird vom Tastschlitten 15 über die Werkstückoberfläche 11 geschleppt. Alternativ hierzu ist es auch möglich, die Schlittengeschwindigkeit parameterabhängig zu variieren. Als Parameter kann beispielsweise die Auslenkung bzw. der Betrag der Schwenkbewegung des Tastarms 26 dienen. Dadurch kann zum Beispiel die Geschwindigkeit des Tastendes 40 relativ zur Werkstückoberfläche konstant gehalten werden.

Abhängig vom Oberflächenprofilverlauf bewegt sich beim Schleppen des Tastendes 40 über die Werkstückoberfläche das Tastende 40 in Messrichtung z auf oder ab, wodurch der Tastarm 26 bzw. die Wippe 28 um die Schwenkachse 27 geschwenkt werden. Die Schwenkbewegung wird mittels des Messwertaufnehmers 45 erfasst und eine entsprechende Auslenkungsgröße s an die Auswerteeinheit 21 übertragen. Aus der Auslenkungsgröße s kann in der Auswerteeinheit 21 der Verlauf des Oberflächenprofils berechnet werden. Die Auswerteeinheit 21 steuert dabei die Kraftstelleinrichtung 35 an, um zwischen dem Tastende 40 und der Werkstückoberfläche 11 eine statische Andrückkraft Fₛₜₐₜ hervorzurufen. Solange die Werkstückoberfläche 11 eben ist und parallel zur Bewegungsrichtung x verläuft, entspricht die tatsächlich zwischen Werkstückoberfläche 11 und Tastende 40 auftretende Messkraft Fₘ der statischen Andrückkraft Fₛₜₐₜ. Treten aufgrund des Oberflächenprofils der Werkstückoberfläche 11 allerdings Beschleunigungen des Tastendes 40 in Messrichtung z auf, so verändert sich die Messkraft Fₘ.

Die Auslenkungsgröße s wird dazu verwendet, in der Auswerteeinheit 21 die oberflächenprofilabhängige Messkraftänderung zu ermitteln. Abhängig von der Auslenkungsrichtung des Tastendes 40 im Messrichtung z erhöht oder verringert sich die Messkraft Fₘ gegenüber der statischen Andrückkraft Fₛₜₐₜ, die durch die Kraftstelleinrichtung 35 hervorgerufen wird. Beim bevorzugten Ausführungsbeispiel wird anhand der Auslenkungsgröße s die tatsächliche Auslenkung z_{T} berechnet. Anhand der Auslenkung z_{T} kann insbesondere durch zweimaliges Ableiten nach der Zeit t die Beschleunigung a_{T} des Tastendes 40 in Messrichtung z ermittelt werden. Diese Beschleunigung a_{T} wird ausschließlich durch das Oberflächenprofil der Werkstückoberfläche 11 bewirkt. Die Beschleunigung a_{T} ist proportional zu einer dynamischen Kraft F_{dyn}, die eine die Änderung der Messkraft Fₘ beschreibende Messkraftänderungsgröße F_{dyn} bildet. Die dynamische Kraft F_{dyn} kann anhand der ermittelten Beschleunigung a_{T} des Tastendes 40 und des Massenträgheitsmoments bzw. Masse der beschleunigten Bestandteile 25, 26, 37, 48 der Messvorrichtung 10 berechnet werden. Die aktuell herrschende Messkraft Fₘ zwischen Tastende 40 und Werkstückoberfläche 11 ergibt sich dabei aus der Summe der statischen Andrückkraft Fₛₜₐₜ plus der dynamischen Kraft F_{dyn}.

In der Auswerteeinheit 21 ist ein Messkraftsollbereich für die Messkraftgröße Fₘ vorgegeben, der zwischen einem unteren Grenzwert Fᵤ und einem oberen Grenzwert Fₒ liegt. Innerhalb des Messkraftsollbereichs liegt die gewünschte Sollmesskraft Fₛₒₗₗ zwischen Tastende 40 und Werkstückoberfläche 11. Der Messkraftsollbereich bzw. dessen Grenzwerte Fᵤ, Fₒ können von der Bedienperson über die Bedienerschnittstelle 50 vorgegeben und variiert werden. Abhängig vom zu vermessenden Werkstück kann der Bediener gewünschte Werte angeben. Weiterhin ist es möglich auch andere Messparameter, wie zum Beispiel die Schlittengeschwindigkeit vₓ oder die Sollmesskraft und demnach die statische Andrückkraft Fₛₜₐₜ vorzugeben bzw. anzupassen.

In der Auswerteeinheit 21 wird während der Messung die dynamische Kraft F_{dyn} und daraus wiederum die aktuelle Messkraft Fₘ berechnet. Überschreitet die aktuelle Messkraft Fₘ den oberen Grenzwert Fₒ wird ein Messfehlersignal erzeugt. In diesem Fall ist die aktuelle Messkraft zu groß, so dass durch elastische Beanspruchung der Tastspitze 25 oder des Tastarms 26 Messfehler entstehen können. Die Auswerteeinheit 21 ruft auch dann ein Messfehlersignal hervor, wenn die aktuelle Messkraft Fₘ unterhalb des unteren Grenzwertes Fᵤ liegt. In diesem Fall ist die Messkraft zwischen Tastende 40 und Werkstückoberfläche 11 zu gering und ein sicherer Kontakt ist nicht sicher gestellt. Die Messung kann daher fehlerhaft sein. Auf diese Weise kann sowohl eine zu hohe Messkraft Fₘ, wie auch ein Abheben des Tastendes von der Werkstückoberfläche 11 erkannt werden.

In Figur 2 ist eine beispielhafte, schematische Messung dargestellt, wobei das Diagramm die Messkraft Fₘ über der Zeit t bzw. dem Weg des Tastendes 40 in Bewegungsrichtung x zeigt. Der Messschlitten 15 bewegt sich beispielsgemäß mit konstanter Schlittengeschwindigkeit vₓ. Zu einem ersten Zeitpunkt t₀ entspricht die Messkraft Fₘ in etwa der gewünschten Sollkraft und mithin der statischen Andrückkraft Fₛₜₐₜ. Zu einem zweiten Zeitpunkt t₁ erreicht das Tastende 40 einen abfallenden Abschnitt 11a oder Rücksprung der Werkstückoberfläche 11. Wegen der im Beispiel als zu groß angenommenen Schlittengeschwindigkeit vₓ hebt das Tastende 40 von der Werkstückoberfläche 11 ab und die Messkraft Fₘ unterschreitet den unteren Grenzwert Fᵤ und sinkt in etwa bis auf 0. Das Tastende 40 wird durch die statische Andrückkraft Fₛₜₐₜ wieder in Richtung der Werkstückoberfläche 11 gedrückt und gelangt zu einem dritten Zeitpunkt t₂ wieder in Kontakt mit der Werkstückoberfläche. Die Messkraft Fₘ steigt beim Auftreffen des Tastendes 40 auf die Werkstückoberfläche 11 steil an und überschreitet den oberen Grenzwert Fₒ. Unmittelbar nach dem dritten Zeitpunkt t₂ sinkt die Messkraft Fₘ wieder auf den gewünschten Messkraftsollwert, an den die statische Andrückkraft Fₛₜₐₜ angepasst ist, wenn keine dynamische Kraft F_{dyn} vorliegt.

Verlässt die in der Auswerteeinheit 21 ermittelte Messkraft Fₘ den Messkraftsollbereich, ruft die Auswerteeinheit 21 ein Messfehlersignal hervor. Bei einer ersten Ausführungsvariante kann das Messfehlersignal an die Bedienerschnittstelle 50 übermittelt werden, wodurch dort eine entsprechende Messfehlerinformation an die Bedienperson in Form eines optischen Signals, einer Textinformation auf dem Display, eines akustischen Signals oder einer beliebigen Kombination der genannten Informationsmöglichkeiten ausgegeben wird. Die Textinformation kann dabei Anweisungen an die Bedienperson enthalten, dass eine fehlerhafte Messung vorliegt und dass die Messung mit angepassten Messparametern wiederholt werden soll. Über die Auswerteeinheit 21 können der Bedienerschnittstelle 50 zur Ausgabe an die Bedienperson geänderte Messparameter, wie zum Beispiel eine geänderte statische Andrückkraft Fₛₜₐₜ und/oder eine geänderte Schlittengeschwindigkeit vₓ übermittelt werden, um der Bedienperson eine erneute und dann fehlerfreie Messung zu ermöglichen.

Alternativ oder zusätzlich hierzu kann auch eine automatisierte Fehlerkorrektur vorgesehen sein, wobei die Auswerteeinheit 21 bei Vorliegen eines Messfehlers automatisch eine erneute fehlerfreie Messung durchführt.

Zur automatischen Fehlerkorrektur fährt die Auswerteeinheit 21 beim bevorzugten Ausführungsbeispiel den Messschlitten 15 bis zur der Schlittenposition zurück, an der der letzte fehlerfreie Messwert der Auslenkungsgröße s vorlag. Alternativ hierzu könnte der Messschlitten 15 auch in seine Anfangsposition zurückgefahren werden. In Abhängigkeit vom aufgetretenen Fehler veranlasst die Auswerteeinheit 21 eine Reduzierung der Schlittengeschwindigkeit vₓ und/oder eine Anpassung der statischen Andrückkraft Fₛₜₐₜ. Der Antriebsmotor 17 bzw. die Kraftstelleinrichtung 35 werden entsprechend angesteuert. Auf das in Figur 2 gezeigte Beispiel bezogen, würde der Messschlitten 15 zurückgefahren werden bis zu einer Stelle, an der das Tastende 40 vor Erreichen des Abschnitts 11a auf der Werkstückoberfläche 11 aufliegt. Anschließend kann eine erneute Messung mit reduzierter Schlittengeschwindigkeit vₓ durchgeführt werden, wodurch ein Abhebend des Tastendes 40 von der Werkstückoberfläche 11 vermieden wäre.

Sollte bei einer Messung nicht ein abhebendes Tastende 40, sondern eine zu hohe Messkraft Fₘ aufgetreten sein, kann die Auswerteeinheit 21 automatisch die statische Andrückkraft Fₛₜₐₜ vermindern und eine erneute Messung durchführen.

In Kenntnis eines einmal erfassten Oberflächenprofils kann die Auswerteeinheit 21 für zukünftige Messungen optimale Messparameter ermitteln, die die Messung des Oberflächenprofils fehlerfrei und gleichzeitig schnellstmöglich erlauben. Die Schlittengeschwindigkeit vₓ wird dabei so groß wie möglich gewählt, ohne das ein Überschreiten des oberen Grenzwertes Fₒ oder ein Unterschreiten des unteren Grenzwertes Fᵤ des Messkraftsollbereichs auftritt. Da die dynamische Kraft F_{dyn} auf Basis des bekannten Oberflächenprofils 11 berechnet werden kann, ist der Auswerteeinheit 21 die Messkraft Fₘ an jeder Stelle des Oberflächenprofils bekannt. Die statische Andrückkraft Fₛₜₐₜ, sowie die Schlittengeschwindigkeit vₓ können durch die Auswerteeinheit 21 so eingestellt werden, dass eine fehlerfreie Messung in kürzest möglicher Zeit erfolgt.

Die Erfindung betrifft eine Messvorrichtung 10 zur Messung eines Oberflächenprofils eines Werkstücks und ein entsprechendes Messverfahren. Ein Messschlitten 15 wird während der Messung geradlinig mit Abstand zur Werkstückoberfläche in eine Bewegungsrichtung x bewegt, so dass die daran angeordnete Tastspitze 25 durch die Bewegung des Messschlittens 15 nicht beschleunigt wird. Das freie Tastende 40 der Tastspitze 25 liegt mit einer Messkraft Fₘ auf der Werkstückoberfläche 11 auf und wird während der Messung in eine quer zur Bewegungsrichtung x verlaufende Messrichtung z ausgelenkt, so dass durch das Oberflächenprofil ein wegabhängige Auslenkung z_{T} des Tastendes 49 erfolgt. Ein Messwertaufnehmer 45 erfasst eine die Auslenkung z_{T} des Tastendes 40 in Messrichtung z beschreibenden Auslenkungsgröße s. In einer Auswerteeinheit 21 wird eine die Änderung der Messkraft Fₘ zwischen Tastende 40 und Werkstückoberfläche 11 beschreibenden Messkraftänderungsgröße F_{dyn} abhängig von der Auslenkungsgröße s gebildet. Anhand der Messkraftänderungsgröße F_{dyn} können Messfehler oder Messungenauigkeiten erkannt werden.

## Patentansprüche

1. Messvorrichtung (10) zur Messung eines Oberflächenprofils eines Werkstücks,
mit einem Messschlitten (15), der über einen Schlittenantrieb (16) während der Messung geradlinig mit Abstand zur Werkstückoberfläche in eine Bewegungsrichtung (x) bewegt wird,
mit einer an dem Messschlitten (15) angeordneten Tastspitze (25), deren freies Tastende (40) mit einer Messkraft (Fₘ) auf der zur vermessenden Werkstückoberfläche (11) aufliegt und in einer quer zur Bewegungsrichtung (x) verlaufenden Messrichtung (z) auslenkbar ist,
mit einem Messwertaufnehmer (45) zur Ermittlung einer die Auslenkung (z_{T}) des Tastendes (40) in Messrichtung (z) beschreibenden Auslenkungsgröße (s), und
mit einer Auswerteeinheit (21) zur Bestimmung einer die Änderung der Messkraft(Fₘ) zwischen Tastende (40) und Werkstückoberfläche (11) beschreibenden Messkraftänderungsgröße (F_{dyn}) abhängig von der Auslenkungsgröße (s), wobei die Auswerteeinheit (21)
dazu eingerichtet ist,
- anhand der Auslenkungsgröße (s) die tatsächliche Auslenkung (z_{T}) zu ermitteln,
- anhand der tatsächlichen Auslenkung (z_{T}) die Beschleunigung (a_{T}) des Tastendes (40) in Messrichtung (z) zu ermitteln,
- die zur Beschleunigung (a_{T}) proportionale dynamische Kraft (F_{dyn}) zu ermitteln , die die Messkraftänderungsgröße (F_{dyn}) darstellt, wobei die dynamische Kraft (F_{dyn}) die Abweichung der Messkraft (Fₘ) von der statischen Andrückkraft (Fₛₜₐₜ) darstellt.

2. Messvorrichtung nach Anspruch 1,
**dadurch gekennzeichnet, dass** der Auswerteeinheit (21) ein Messkraftsollbereich (Fₒ, Fᵤ) für die Messkraftgröße (Fₘ) vorgegeben ist, innerhalb dem eine fehlerfreie Messung erfolgen kann.

3. Messvorrichtung nach Anspruch 2,
**dadurch gekennzeichnet, dass** eine mit der Auswerteeinheit (21) verbundene Bedienerschnittstelle (50) vorgesehen ist, über die der Messkraftsollbereich (Fₒ, Fᵤ) durch eine Bedienperson vorgegeben und/oder variiert werden kann.

4. Messvorrichtung nach Anspruch 2,
**dadurch gekennzeichnet, dass** die Auswerteeinheit (21) ein Messfehlersignal erzeugt, wenn die Messkraftgröße (Fₘ) außerhalb des Messkraftsollbereichs (Fₒ, Fᵤ) liegt.

5. Messvorrichtung nach Anspruch 4,
**dadurch gekennzeichnet, dass** das Messfehlersignal ein Abheben des Tastendes (40) von der Werkstückoberfläche (11) und/oder eine zu hohe Messkraft (Fₘ) zwischen Tastende (40) und Werkstückoberfläche (11) angibt.

6. Messvorrichtung nach Anspruch 4,
**dadurch gekennzeichnet, dass** eine von der Auswerteeinheit (21) ansteuerbare Bedienerschnittstelle (50) vorgesehen ist, die beim Vorliegen des Messfehlersignals eine Messfehlerinformation an die Bedienperson ausgibt.

7. Messvorrichtung nach Anspruch 6,
**dadurch gekennzeichnet, dass** die Messfehlerinformation eine veränderte Schlittengeschwindigkeit (vₓ) enthält, die von der Bedienperson für eine erneute Messung eingestellt werden kann.

8. Messvorrichtung nach Anspruch 4,
**dadurch gekennzeichnet, dass** die Auswerteeinheit (21) beim Vorliegen des Messfehlersignals den Schlittenantrieb (16) ansteuert, um den Messschlitten (15) zumindest bis zu der Schlittenposition zurückzufahren, an der der letzte fehlerfreie Messwert der Auslenkungsgröße (s) vorlag.

9. Messvorrichtung nach Anspruch 4,
**dadurch gekennzeichnet, dass** die Auswerteeinheit (21) beim Vorliegen des Messfehlersignals die Schlittengeschwindigkeit (vₓ) des Schlittenantriebs (16) für die weitere Messung anpasst.

10. Messvorrichtung nach Anspruch 1,
**dadurch gekennzeichnet, dass** eine durch die Auswerteeinheit (21) ansteuerbare Kraftstelleinrichtung (35) vorgesehen ist, die eine vorgebbare statische Andrückkraft (Fₛₜₐₜ) zwischen Tastende (40) und Werkstückoberfläche (11) erzeugt.

11. Messvorrichtung nach Anspruch 10 in Verbindung mit Anspruch 4,
**dadurch gekennzeichnet, dass** die Auswerteeinheit (21) die Kraftstelleinrichtung (35) zur Veränderung der statischen Andrückkraft (Fₛₜₐₜ) ansteuert, wenn ein Messfehlersignal vorliegt.

12. Messvorrichtung nach Anspruch 10,
**dadurch gekennzeichnet, dass** es sich bei der Kraftstelleinrichtung (35) um einen Linearantrieb handelt.

13. Messvorrichtung nach Anspruch 1,
**dadurch gekennzeichnet, dass** der Schlittenantrieb (16) den Messschlitten (15) während der Messung gleichförmig mit konstanter Schlittengeschwindigkeit bewegt.

14. Messvorrichtung nach Anspruch 1,
**dadurch gekennzeichnet, dass** der Schlittenantrieb (16) den Messschlitten (15) während der Messung mit einer. parameterabhängig vorgegebenen Schlittengeschwindigkeit bewegt, insbesondere mit einer von der Auslenkungsgröße (s) abhängigen Schlittengeschwindigkeit.

15. Verfahren zur Messung eines Oberflächenprofils eines Werkstücks,
wobei während der Messung ein Messschlitten (15) geradlinig mit Abstand zur Werkstückoberfläche (11) in eine Bewegungsrichtung (x) bewegt wird,
wobei ein freies Tastende (40) einer am Messschlitten (15) gelagerten Tastspitze (25) mit einer Messkraft (Fₘ) auf der zur vermessenden Werkstückoberfläche (11) aufliegt und entlang der Bewegungsrichtung (x) über die Werkstückoberfläche (11) gleitet,
wobei eine Auslenkungsgröße (s) erfasst wird, die die Auslenkung (z_{T}) des Tastendes (40) in eine quer zur Bewegungsrichtung (x) verlaufende Messrichtung (z) beschreibt, und
wobei eine die aktuelle Änderung der Messkraft (Fₘ) zwischen Tastende (40) und Werkstückoberfläche (11) beschreibenden Messkraftänderungsgröße (F_{dyn}) abhängig von der Auslenkungsgröße (s) bestimmt wird, indem
- anhand der Auslenkungsgröße (s) die tatsächliche Auslenkung (z_{T}) ermittelt wird,
- anhand der tatsächlichen Auslenkung (z_{T}) die Beschleunigung (a_{T}) des Tastendes (40) in Messrichtung (z) ermittelt wird, und
- die zur Beschleunigung (a_{T}) proportionale dynamische Kraft (F_{dyn}) ermittelt wird, die die Messkraftänderungsgröße (F_{dyn}) darstellt, wobei die dynamische Kraft (F_{dyn}) die Abweichung der Messkraft (Fₘ) von der statischen Andrückkraft (Fₛₜₐₜ) darstellt.

## Claims

1. Measuring device (10) for measuring a surface profile of a workpiece,
having a measuring slide (15) which, during the measuring, is moved in a moving direction (x) in a linear manner and at a distance from the workpiece surface via a slide drive (16),
having a probe tip (25) arranged on the measuring slide (15), the free probe end (40) of which rests on the workpiece surface (11) to be measured with a measuring force (Fₘ) and is able to be deviated in a measuring direction (z) that runs transversely relative to the moving direction (x),
having a measuring sensor (45) for detecting a deviation variable (s) that describes the deviation (z_{T}) of the probe end (40) in the measuring direction (z), and
having an evaluation unit (21) for determining, depending on the deviation variable (s), a measuring force alteration variable (F_{dyn}) that describes the alteration in measuring force (Fₘ) between the probe end (40) and the workpiece surface (11), wherein the evaluation unit (21) is set up
- to detect the actual deviation (z_{T}) by way of the deviation variable (s),
- to detect the acceleration (aT) of the probe end (40) in the measuring direction (z) by way of the actual deviation (z_{T}),
- to detect the dynamic force (F_{dyn}) that is proportional to the acceleration (aT), said proportional dynamic force representing the measuring force alteration variable (F_{dyn}), wherein the dynamic force (F_{dyn}) represents the deviation of the measuring force (Fₘ) from the static pressing force (Fₛₜₐₜ).

2. Measuring device according to claim 1,
**characterised in that** a measuring force target range (Fₒ, Fᵤ) for the measuring force variable (Fₘ) is prescribed to the evaluation unit (21), within which range an error-free measurement is able to take place.

3. Measuring device according to claim 2,
**characterised in that** a user interface (50) connected to the evaluation unit (21) is provided, with which the measuring force target range (Fₒ, Fᵤ) is able to be defined and/or varied by an operator.

4. Measuring device according to claim 2,
**characterised in that** the evaluation unit (21) generates a measurement error signal when the measuring force variable (Fₘ) is outside the measuring force target range (Fₒ, Fᵤ).

5. Measuring device according to claim 4,
**characterised in that** the measurement error signal specifies a lifting of the probe end (40) from the workpiece surface (11) and/or too high a measuring force (Fₘ) between the probe end (40) and the workpiece surface (11).

6. Measuring device according to claim 4,
**characterised in that** an operator interface (50) that is able to be controlled by the evaluation unit (21) is provided, said interface emitting measurement error information to the operator in the presence of the measurement error signal.

7. Measuring device according to claim 6,
**characterised in that** the measurement error information contains an altered slide speed (vₓ), said slide speed being able to be adjusted by the operator for a further measurement.

8. Measuring device according to claim 4,
**characterised in that** the evaluation unit (21) controls the slide drive (16) in the presence of the measurement error signal, in order to retract the measuring slide (15) at least up to the slide position at which the last error-free measured value of the deviation variable (s) was present.

9. Measuring device according to claim 4,
**characterised in that** the evaluation unit (21) adapts the slide speed (vₓ) of the slide drive (16) for the further measurement in the presence of the measurement error signal.

10. Measuring device according to claim 1,
**characterised in that** a force adjustment device (35) that is able to be controlled by the evaluation unit (21) is provided, said force adjustment device generating a predefinable, static pressing force (Fₛₜₐₜ) between the probe end (40) and the workpiece surface (11).

11. Measuring device according to claim 10 in conjunction with claim 4,
**characterised in that** the evaluation unit (21) controls the force adjustment device (35) so as to alter the static pressing force (Fₛₜₐₜ) when there is a measurement error signal.

12. Measuring device according to claim 10,
**characterised in that** the force adjustment device (35) is a linear drive.

13. Measuring device according to claim 1,
**characterised in that** the slide drive (16) moves the measuring slide (15) during the measurement uniformly with a constant slide speed.

14. Measuring device according to claim 1,
**characterised in that** the slide drive (16) moves the measuring slide (15) during the measurement with a parameter-dependent, predefined slide speed, in particular with a slide speed that is dependent on the deviation variable (s).

15. Method for measuring a surface profile of a workpiece,
wherein a measuring slide (15), during the measuring, is moved in a moving direction (x) in a linear manner and at a distance from the workpiece surface (11),
wherein a free probe end (40) of a probe tip (25) assembled on the measuring slide (15) rests on the workpiece surface (11) to be measured with a measuring force (Fₘ) and slides over the workpiece surface (11) along the moving direction (x),
wherein a deviation variable (s) is detected which describes the deviation (z_{T}) of the probe end (40) in a measuring direction (z) that runs transversely relative to the moving direction (x), and
wherein a measuring force alteration variable (F_{dyn}) that describes the present alteration of the measuring force (Fₘ) between the probe end (40) and the workpiece surface (11) is determined depending on the deviation variable (s), by
- the actual deviation (z_{T}) being detected by way of the deviation variable (s),
- the acceleration (a_{T}) of the probe end (40) in the measuring direction (z) being detected by way of the actual deviation (z_{T}), and
- the dynamic force (F_{dyn}) that is proportional to the acceleration (aT) being detected, said proportional dynamic force representing the measuring force alteration variable (F_{dyn}), wherein the dynamic force (F_{dyn}) represents the deviation of the measuring force (Fₘ) from the static pressing force (Fₛₜₐₜ).

## Revendications

1. Dispositif de mesure (10) destiné à mesurer un profil de surface d'une pièce,
comprenant un chariot de mesure (15) qui est déplacé, pendant la mesure, par l'intermédiaire d'un moyen d'entraînement de chariot (16) dans une direction de déplacement (x), de façon rectiligne et à distance de la surface de pièce,
comprenant une pointe de palpage (25) qui est disposée sur le chariot de mesure (15) et dont l'extrémité de palpage (40) libre est en appui avec une force de mesure (Fₘ) sur la surface de pièce (11) devant être mesurée et peut être déviée dans une direction de mesure (z) s'étendant transversalement à la direction de déplacement (x),
comprenant un capteur de mesure (45) destiné à déterminer une grandeur de déviation (s) décrivant la déviation (z_{T}) de l'extrémité de palpage (40) dans la direction de mesure (z), et
comprenant une unité d'évaluation (21) destinée à calculer une grandeur de variation de force de mesure (F_{dyn}) décrivant la variation de la force de mesure (Fₘ) entre l'extrémité de palpage (40) et la surface de pièce (11), en fonction de la grandeur de déviation (s),
sachant que l'unité d'évaluation (21)
est conçue pour
- déterminer la déviation réelle (z_{T}) à l'aide de la grandeur de déviation (s),
- déterminer l'accélération (a_{T}) de l'extrémité de palpage (40) dans la direction de mesure (z), à l'aide de la déviation réelle (zᵣ),
- déterminer la force dynamique (F_{dyn}) proportionnelle à l'accélération (a_{T}), qui représente la grandeur de variation de force de mesure (F_{dyn}), sachant que la force dynamique (F_{dyn}) représente l'écart de la force de mesure (Fₘ) par rapport à la force d'appui statique (Fₛₜₐₜ).

2. Dispositif de mesure selon la revendication 1, **caractérisé en ce que** pour l'unité d'évaluation (21), une plage de consigne de force de mesure (Fₒ, Fᵤ) est prédéterminée pour la grandeur de force de mesure (Fₘ), à l'intérieur de laquelle une mesure exempte d'erreurs peut être effectuée.

3. Dispositif de mesure selon la revendication 2, **caractérisé en ce qu'**il est prévu une interface utilisateur (50) qui est reliée à l'unité d'évaluation (21) et par l'intermédiaire de laquelle la plage de consigne de force de mesure (Fₒ, Fᵤ) peut être prédéfinie et/ou modifiée par un opérateur.

4. Dispositif de mesure selon la revendication 2, **caractérisé en ce que** l'unité d'évaluation (21) génère un signal d'erreur de mesure, si la grandeur de force de mesure (Fₘ) se situe à l'extérieur de la plage de consigne de force de mesure (Fₒ, Fᵤ).

5. Dispositif de mesure selon la revendication 4, **caractérisé en ce que** le signal d'erreur de mesure indique la séparation de l'extrémité de palpage (40) de la surface de pièce (11) et/ou une force de mesure (Fₘ) trop élevée entre l'extrémité de palpage (40) et la surface de pièce (11).

6. Dispositif de mesure selon la revendication 4, **caractérisé en ce qu'**il est prévu une interface utilisateur (50) qui peut être activée par l'unité d'évaluation (21) et qui, en cas de signal d'erreur de mesure, indique une information d'erreur de mesure à l'opérateur.

7. Dispositif de mesure selon la revendication 6, **caractérisé en ce que** l'information d'erreur de mesure contient une vitesse de chariot (vₓ) modifiée, qui peut être réglée par l'opérateur en vue d'une nouvelle mesure.

8. Dispositif de mesure selon la revendication 4, **caractérisé en ce que**, en cas de signal d'erreur de mesure, l'unité d'évaluation (21) active le moyen d'entraînement de chariot (16), afin de ramener le chariot de mesure (15) au moins jusqu'à la position de chariot dans laquelle était produite la dernière valeur mesurée exempte d'erreur de la grandeur de déviation (s).

9. Dispositif de mesure selon la revendication 4, **caractérisé en ce que**, en cas de signal d'erreur de mesure, l'unité d'évaluation (21) adapte la vitesse de chariot (vₓ) du moyen d'entraînement de chariot (16) pour la suite de la mesure.

10. Dispositif de mesure selon la revendication 1, **caractérisé en ce qu'**il est prévu un système de réglage de force (35) qui peut être activé par l'unité d'évaluation (21) et qui produit une force d'appui statique (Fₛₜₐₜ), pouvant être préétablie, entre l'extrémité de palpage (40) et la surface de pièce (11).

11. Dispositif de mesure selon la revendication 10 en relation avec la revendication 4, **caractérisé en ce que** l'unité d'évaluation (21) active le système de réglage de force (35) en vue de modifier la force d'appui statique (Fₛₜₐₜ), lorsqu'il y a un signal d'erreur de mesure.

12. Dispositif de mesure selon la revendication 10, **caractérisé en ce que** le système de réglage de force (35) est un moyen d'entraînement linéaire.

13. Dispositif de mesure selon la revendication 1, **caractérisé en ce que**, pendant la mesure, le moyen d'entraînement de chariot (16) déplace le chariot de mesure (15) de manière uniforme à une vitesse de chariot constante.

14. Dispositif de mesure selon la revendication 1, **caractérisé en ce que**, pendant la mesure, le moyen d'entraînement de chariot (16) déplace le chariot de mesure (15) à une vitesse de chariot prédéterminée en fonction de paramètres, en particulier à une vitesse de chariot qui est fonction de la grandeur de déviation (s).

15. Procédé de mesure d'un profil de surface d'une pièce,
selon lequel, pendant la mesure, un chariot de mesure (15) est déplacé dans une direction de déplacement (x), de façon rectiligne et à distance de la surface de pièce (11),
selon lequel une extrémité de palpage (40) libre d'une pointe de palpage (25) disposée sur le chariot de mesure (15) est en appui avec une force de mesure (Fₘ) sur la surface de pièce (11) devant être mesurée et glisse sur la surface de pièce (11), le long de la direction de déplacement (x),
selon lequel on recueille une grandeur de déviation (s) qui décrit la déviation (z_{T}) de l'extrémité de palpage (40) dans une direction de mesure (z) s'étendant transversalement à la direction de déplacement (x), et
selon lequel on calcule une grandeur de variation de force de mesure (F_{dyn}) décrivant la variation momentanée de la force de mesure (Fₘ) entre l'extrémité de palpage (40) et la surface de pièce (11), en fonction de la grandeur de déviation (s), par le fait que
- on détermine la déviation réelle (z_{T}) à l'aide de la grandeur de déviation (s),
- on détermine l'accélération (a_{T}) de l'extrémité de palpage (40) dans la direction de mesure (z), à l'aide de la déviation (z_{T}) réelle, et
- on détermine la force dynamique (F_{dyn}) qui est proportionnelle à l'accélération (a_{T}) et représente la grandeur de variation de force de mesure (F_{dyn}), sachant que la force dynamique (F_{dyn}) représente l'écart de la force de mesure (Fₘ) par rapport à la force d'appui statique (Fstat).
